(19) Europäisches Patentamt / European Patent Office / Office européen des brevets

(11) **EP 3 775 934 B1**

(12) **FASCICULE DE BREVET EUROPEEN**

(45) Date de publication et mention
de la délivrance du brevet:
**07.09.2022   Bulletin 2022/36**

(21) Numéro de dépôt: **19722667.3**

(22) Date de dépôt: **11.04.2019**

(51) Classification Internationale des Brevets (IPC):
***G01P 5/10*** *(2006.01)*

(52) Classification Coopérative des Brevets (CPC):
**G01P 5/10**

(86) Numéro de dépôt international:
**PCT/FR2019/050859**

(87) Numéro de publication internationale:
**WO 2019/197785 (17.10.2019 Gazette 2019/42)**

(54) **PROCEDE ET DISPOSITIF DE MESURE D'UNE VITESSE EFFECTIVE DE VENT AU VOISINAGE D'UN OBJET**

VERFAHREN UND VORRICHTUNG ZUR MESSUNG EINER EFFEKTIVEN WINDGESCHWINDIGKEIT IN DER NÄHE EINES OBJEKTES

METHOD AND DEVICE FOR MEASURING AN EFFECTIVE WIND SPEED IN THE VICINITY OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.04.2018   FR 1853238**

(43) Date de publication de la demande:
**17.02.2021   Bulletin 2021/07**

(73) Titulaire: **RTE Réseau de Transport d'Electricité 92073 La Défense Cedex (FR)**

(72) Inventeur: **LE MAUFF, Camille 75018 Paris (FR)**

(74) Mandataire: **Bonnet, Michel Cabinet Bonnet 93, rue Réaumur 75002 Paris (FR)**

(56) Documents cités:
**CN-A- 107 607 832     DE-A1-102007 034 321
US-A- 4 391 137     US-A- 5 085 073
US-B2- 9 366 688**

• **NGUYEN N-T: "A novel wind sensor concept based on thermal image measurement using a temperature sensor array", SENSORS AND ACTUATORS A: PHYS, ELSEVIER BV, NL, vol. 110, no. 1-3, 1 février 2004 (2004-02-01), pages 323-327, XP004486588, ISSN: 0924-4247, DOI: 10.1016/J.SNA.2003.10.041**

**Description**

La présente invention concerne un procédé de mesure d'une vitesse effective de vent au voisinage d'un objet. Elle concerne également un programme d'ordinateur et un dispositif correspondants.

Par « vitesse effective », on entend la valeur moyenne autour de laquelle oscille instantanément la composante transversale de la vitesse réelle du vent contre l'objet considéré. C'est cette composante transversale qui participe pour l'essentiel au refroidissement par convection de l'objet. Sa valeur moyenne est estimée dans une fenêtre temporelle d'échelle négligeable devant l'échelle des changements de conditions climatiques et devant l'échelle des variations thermiques de l'objet, de sorte qu'elle peut être considérée comme une valeur instantanée de vitesse de vent mesurée, insensible aux fluctuations instantanées de la vitesse et de l'angle d'incidence du vent.

Lorsque l'objet considéré est une portion de conducteur d'une ligne aérienne de transport d'électricité, une telle mesure est utile à de multiples égards. Par exemple elle peut être prise en compte dans un modèle général d'échanges thermiques sur la portion de conducteur de la ligne aérienne pour déterminer dynamiquement les capacités maximales de transport d'électricité de cette dernière, dans le domaine applicatif du « dynamic line rating ». Elle peut également être utile pour extrapoler vers des conditions de référence le comportement thermique d'un dispositif quelconque à surveiller, positionné sur une installation de transport d'électricité par ligne aérienne, de manière à juger plus efficacement de son éventuel dysfonctionnement lorsque du courant électrique circule. Elle peut en outre être utile pour recaler une mesure de position de portion de ligne aérienne par télédétection laser.

De nombreuses techniques sont proposées dans l'état de l'art, notamment dans le domaine du transport d'électricité.

Une première famille de solutions consiste à prendre des mesures de vitesse de vent en un ou plusieurs endroits distants d'une ligne aérienne considérée et à extrapoler ces mesures pour en déduire une valeur de vitesse de vent au voisinage de la ligne aérienne. Il est par exemple généralement demandé, quand c'est possible, une valeur de vitesse de vent à la tour de contrôle de l'aérodrome le plus proche. Mais la précision d'une telle solution est très relative et dépend d'une homogénéité géographique incertaine des conditions météorologiques. C'est notamment inexploitable en zone montagneuse. Une autre solution est fournie dans le document de brevet FR 3 047 083 B1. Elle prévoit de déployer des stations anémométriques autour d'une portion de réseau de transport d'électricité et d'extrapoler leurs mesures par application d'un modèle de propagation de vent vers des points singuliers de la portion de réseau. Cette solution est certainement meilleure, mais également imprécise dans certaines conditions difficiles et coûteuse en installation de stations anémométriques.

Une deuxième famille de solutions consiste à prévoir des capteurs de vent disposés au voisinage d'une ligne aérienne considérée. Il peut s'agir de systèmes à anémomètres (à coupelles, ultrasons, fils chauds, etc.) et/ou girouettes, ou de systèmes à capteurs d'oscillations montés sur conducteurs ou sur pylônes, tels que ceux par exemple décrits dans les documents de brevets US 4,728,887, US 6,441,603 B1 et US 2014/0163884 A1.

Une autre famille de solutions consiste à prendre des mesures de vitesse de vent à partir d'un hélicoptère volant à proximité d'une ligne aérienne considérée. En particulier, de telles mesures par hélicoptère peuvent être envisagées lors de visites héliportées de surveillance d'équipements positionnés sur ou au voisinage de la ligne aérienne, au cours desquelles des images thermiques des équipements à surveiller sont généralement obtenues à l'aide de capteurs à imagerie infrarouge. Mais le dispositif de mesure de vent employé (capteur anémométrique embarqué, sonde à tube de Pitot) est alors susceptible d'être perturbé par le souffle engendré par la rotation des pales de l'hélicoptère. Si l'on veut éviter ce problème, des solutions de positionnement ou de conception du dispositif de mesure existent mais elles sont toutes coûteuses. Dautres solutions sont connues de Nam-Trung Nguyen: "A novel wind sensor concept based on thermal image measurement using a temperature sensor array", Sensors and Actuators, vol. 110, no. 1-3, pages 323-327, qui porte sur un procédé/dispositif de mesure d'une vitesse effective de vent utilisant un disque chauffé à température constante et une pluralité de capteurs thermoélectriques disposés autour du disque chauffé sur un support commun, et de DE 10 2007 034321 A1 qui porte sur un dispositif de mesure d'une vitesse effective de vent, monté sur le capot d'un véhicule automobile, comportant un élément chauffant et au moins deux capteurs thermoélectriques distants.

Il peut ainsi être souhaité de prévoir un procédé de mesure d'une vitesse effective de vent au voisinage d'un objet qui permette de s'affranchir d'au moins une partie des problèmes et contraintes précités.

Il est donc proposé un procédé comportant les étapes selon la revendication 1.

Ainsi, le procédé proposé ne nécessite aucune extrapolation géographique de mesures ni aucun dispositif encombrant ou onéreux sur ou au voisinage de l'objet considéré. Par simple traitement d'image et exploitation d'un modèle de diffusion thermique par conduction (c'est bien là le sens de la courbe d'évolution de température dans l'objet) à partir d'un point de référence de contact thermique d'un équipement quelconque avec l'objet considéré, on obtient une mesure fiable d'une valeur de vitesse effective de vent à un instant donné. En particulier, dans le contexte précité de surveillance héliportée d'équipements positionnés sur ou au voisinage de lignes aériennes de transport d'électricité, l'exploitation d'images thermiques de portions de conducteurs pour en déduire une vitesse effective de vent est sans surcoût. Par ailleurs, contrairement à toutes les solutions de mesure de vent par des capteurs à fils chauds, on exploite ici avantageusement les caractéristiques de l'effet de bord créé au niveau du point de référence. Le champ de température engendré dans l'objet considéré par cet effet de bord présente en fait une longueur caractéristique qui dépend des propriétés de l'objet et de la vitesse effective de vent qui le refroidit. De plus, la capacité calorifique de l'objet filtre thermiquement les variations de la vitesse du vent sur des temps courts, ce qui permet de négliger l'influence de la perturbation de tout flux d'air, notamment par hélicoptère lorsqu'il s'agit d'une surveillance héliportée.

De façon optionnelle, l'objet est de forme essentiellement allongée autour d'un axe longitudinal et le modèle est un modèle de courbe d'évolution de température le long de cet axe longitudinal, l'estimation de plusieurs valeurs de température se faisant le long de cet axe longitudinal.

De façon optionnelle également, l'objet est une portion de conducteur d'une ligne aérienne de transport d'électricité et le modèle est un modèle de courbe d'évolution de température le long de cette portion de conducteur, l'estimation de plusieurs valeurs de température se faisant le long de la portion de conducteur.

De façon optionnelle également, le modèle de courbe d'évolution de température le long de la portion de conducteur prend la forme suivante :

$$T(x) = T_\infty + (T(0) - T_\infty) \times \exp\left(-\frac{x}{l_c}\right),$$

où x est une abscisse le long de la portion de conducteur exprimée à partir d'une origine située au point de référence, $T_\infty$ est une valeur de température vers laquelle tend asymptotiquement la portion de conducteur lorsque l'on s'éloigne du point de référence, T(0) est la température au point de référence, exp est la fonction exponentielle et $l_c$ est un paramètre, appelé longueur caractéristique, dépendant du paramètre de vitesse effective de vent.

De façon optionnelle également, la relation de dépendance entre la longueur caractéristique $l_c$ et le paramètre de vitesse effective de vent noté V prend la forme suivante :

$$V = \left(\frac{A}{l_c^2} - B\right)^n,$$

où A est un paramètre dépendant de caractéristiques physiques de la portion de conducteur, B est un paramètre dépendant de caractéristiques physiques et environnementales de la portion de conducteur et n est une constante réelle.

De façon optionnelle également, la relation de dépendance entre la longueur caractéristique $l_c$ et le paramètre de vitesse effective de vent noté V prend la forme suivante :

$$V = A' \cdot l_c^{-n'},$$

où A' est un paramètre dépendant de caractéristiques physiques de la portion de conducteur et n' est une constante réelle.

De façon optionnelle également, l'étape d'estimation de plusieurs valeurs de température le long de la portion de conducteur comporte :

- une conversion entre valeurs de pixels et valeurs de température exprimées en Kelvin selon une règle de conversion prédéterminée, et
- une conversion entre des distances exprimées en pixels et des distances exprimées en mètres selon une règle de conversion déterminée par :

  • estimation, dans l'image thermique par le calculateur, d'un diamètre de la portion de conducteur exprimé en pixels, et
  • association de ce diamètre estimé à un diamètre connu de la portion de conducteur exprimé en mètres.

De façon optionnelle également, un procédé de mesure selon l'invention peut comporter une détection préalable d'axe longitudinal de l'objet réalisée par une analyse en composantes principales d'au moins une partie de l'image thermique, cette analyse étant exécutée par le calculateur.

De façon optionnelle également, la comparaison des valeurs de température estimées avec le modèle stocké lors de l'étape de mesure de la vitesse effective de vent est réalisée par un ajustement paramétrique du modèle de courbe d'évolution de température dans l'objet, incluant un ajustement du paramètre de vitesse effective de vent, à l'aide d'une méthode d'optimisation, par exemple une méthode de moindres carrés, exécutée par le calculateur.

Selon l'invention, l'image thermique est capturée à l'aide d'un capteur infrarouge.

Il est également proposé un programme d'ordinateur selon la revendication 10.

Il est également proposé un dispositif selon la revendication 11.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de mesure d'une vitesse effective de vent au voisinage d'un objet, selon un mode de réalisation de l'invention,
- la figure 2 illustre les étapes successives d'un procédé de mesure mis en œuvre par le dispositif de la figure 1, selon un mode de réalisation de l'invention, et
- la figure 3 illustre trois résultats intermédiaires obtenus à l'issue de trois étapes intermédiaires du procédé de la figure 2.

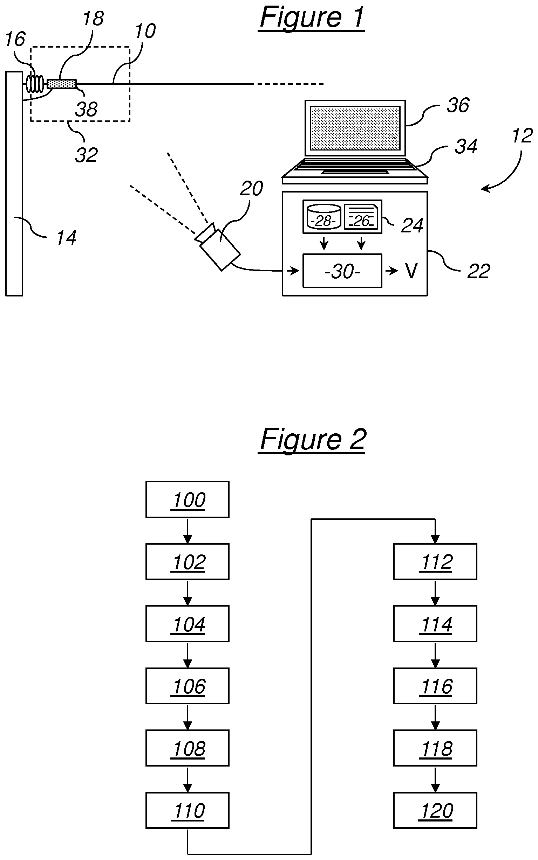

L'installation illustrée schématiquement sur la figure 1 comporte un objet 10, au voisinage duquel on souhaite mesurer une vitesse effective de vent, et un dispositif de mesure 12 capable d'effectuer cette mesure.

Le contexte applicatif non limitatif illustré sur la figure 1 est celui du transport d'électricité par ligne aérienne. Dans ce contexte, l'objet 10 est un élément constitutif de l'installation de transport d'électricité par ligne aérienne, par exemple une portion de conducteur de ligne aérienne. L'installation comporte, outre cette portion de conducteur 10, un pylône ou poteau 14 de maintien de la ligne aérienne en hauteur, ainsi que des équipements divers de raccordement, dérivation, sectionnement ou isolation tels qu'un dispositif isolateur à assiettes 16, un équipement 18 en contact thermique avec la portion de conducteur 10 et d'autres équipements éventuels au voisinage de la portion de conducteur 10, en contact thermique ou pas avec elle. L'équipement 18 est par exemple un dispositif de raccordement électrique, un manchon, un dérivateur, un sectionneur ou tout autre dispositif fonctionnel quelconque connu dans le domaine du transport électrique aérien. Il peut être traversé par du courant électrique et son comportement thermique peut être à surveiller pour détecter tout risque de dysfonctionnement, par exemple tout risque de surchauffe. Les autres équipements éventuels disposés au voisinage de la portion de conducteur 10, non illustrés sur la figure 1, peuvent également être traversés par du courant électrique et à surveiller pour détecter tout risque de dysfonctionnement.

D'une façon plus générale et dans un contexte applicatif qui peut être différent de celui illustré sur la figure 1, l'équipement 18 est un élément structurel de l'installation qui comporte l'objet 10, autre que l'objet 10, dont la fonction est de raccorder l'objet 10 mécaniquement ou électro-mécaniquement à l'installation et présentant en conséquence une interface de contact thermique avec l'objet 10.

Le dispositif de mesure 12 comporte un capteur infrarouge d'image thermique, par exemple un capteur/imageur infrarouge 20 tel qu'une caméra thermique infrarouge, connecté avec ou sans fil à un ordinateur 22. De façon connue en soi, l'ordinateur 22 comporte des moyens 24 de stockage, par exemple une mémoire RAM, pour le stockage d'un programme d'ordinateur 26 et de paramètres 28 pour l'exécution du programme d'ordinateur 26. Il comporte également un calculateur 30, par exemple un microprocesseur, pour l'exécution du programme d'ordinateur 26 sur la base des paramètres 28 et d'une image thermique infrarouge 32 qu'il reçoit du capteur infrarouge 20 et enregistre dans ses moyens 24 de stockage. Il comporte par ailleurs avantageusement des outils périphériques tels qu'un clavier 34 avec dispositif d'interaction tactile et un écran 36.

Les paramètres 28 sont notamment ceux d'un modèle de courbe d'évolution de température dans la portion de conducteur 10 à partir d'un point de référence prédéterminé 38 situé à une interface de contact thermique entre la portion de conducteur 10 et l'équipement 18 en contact thermique avec elle, le modèle comportant un paramètre de vitesse effective de vent.

L'image thermique 32 obtenue à l'aide du capteur infrarouge 20 inclut avantageusement une représentation pixellisée de la portion de conducteur 10, d'au moins une partie de l'équipement 18 en contact thermique avec elle et du point de référence 38. Pour que l'image thermique 32 puisse illustrer une évolution de température le long de la portion de conducteur 10 par conduction thermique, il suffit que les températures de l'équipement 18 et de la portion de conducteur 10 à distance de l'équipement 18 diffèrent de manière à engendrer un gradient local de température: en d'autres termes, l'équipement 18 peut indifféremment être plus chaud (i.e. comportement thermique éventuellement anormal à détecter) ou plus froid (via des dimensions supérieures au diamètre de la portion de conducteur 10 offrant ainsi une meilleure surface d'échange par convection avec l'extérieur).

Le calculateur 30 est alors plus précisément conçu pour, lorsqu'il exécute les instructions du programme d'ordinateur 26 :

- localiser le point de référence 38 dans l'image thermique 32,
- estimer, dans l'image thermique 32, plusieurs valeurs de température le long de la portion de conducteur 10 à partir du point de référence 38 localisé, et
- mesurer la vitesse effective de vent au voisinage de la portion de conducteur 10 par estimation d'une valeur V de cette vitesse sur la base d'une comparaison des valeurs de température estimées avec le modèle stocké.

Le fonctionnement du dispositif de mesure 12 va maintenant être détaillé en référence à la figure 2.

Au cours d'une première étape préalable 100, un modèle de courbe d'évolution de température dans la portion de conducteur 10 à partir du point de référence 38 situé au contact thermique de l'équipement 18 est enregistré dans les moyens de stockage 24. Il est plus précisément défini par au moins une partie des paramètres 28 incluant un paramètre de vitesse effective de vent. Pour un objet quelconque autre que la portion de conducteur 10, y compris un objet de géométrie et constitution complexes, le modèle peut être défini empiriquement, par tâtonnements, à l'aide d'outils de modélisation, etc. Pour un objet quelconque mais de forme générale essentiellement allongée autour d'un axe longitudinal, c'est plus précisément un modèle de courbe d'évolution de température le long de cet axe longitudinal qui est retenu.

Pour la portion de conducteur 10, le modèle peut être trouvé et défini analytiquement comme cela va maintenant être démontré.

En effet, de nombreux modèles de bilan thermique en régime stationnaire sur lignes électriques aériennes sont connus, notamment par des publications IEEE (pour « Institute of Electrical and Electronics Engineers ») telles que la norme IEEE 738-1993, ou par des publications Cigré (pour «Conseil International des Grands Réseaux Électriques »). Il peut notamment être considéré d'une façon générale que conformément au principe de conservation de l'énergie appliqué à la portion de conducteur 10, selon lequel à chaque instant la puissance reçue de l'extérieur ajoutée à la puissance engendrée par effet Joule est égale à la puissance émise à l'extérieur, l'équation suivante de bilan thermique est vérifiée :
$$-\frac{dP_{conduction}}{dx}\mathrm{dx} + P_{joule} + P_{solaire} + P_{rayonnement}^{reçue} = P_{rayonnement}^{émise} + P_{convection}$$
, où

$P_{conduction}$ est la puissance par conduction thermique sur une section de la portion de conducteur 10, $\frac{dP_{conduction}}{dx}$ étant alors sa dérivée longitudinale et $-\frac{dP_{conduction}}{dx}\mathrm{dx}$ la puissance apportée par conduction thermique sur une tranche longitudinale élémentaire dx de la portion de conducteur 10, $P_{joule}$ est la puissance par effet Joule sur la tranche dx, $P_{solaire}$ est la puissance du rayonnement solaire reçu sur la tranche dx, $P_{rayonnement}^{reçue}$ est la puissance de rayonnement reçu par l'extérieur sur la tranche dx, $P_{rayonnement}^{émise}$ est la puissance de rayonnement émis par l'extérieur sur la tranche dx et $P_{convection}$ est la puissance de convection sur la tranche dx.

On fait également l'hypothèse acceptable et réaliste que la portion de conducteur 10 a un comportement thermique unidimensionnel, c'est-à-dire présente une température homogène dans sa section.

Sous cette condition, la puissance $P_{conduction}$ par conduction thermique sur une section de conducteur peut s'exprimer selon l'équation connue suivante :

$$P_{conduction} = -\lambda S \frac{dT}{dx},$$

où $\lambda$, exprimée en W.m$^{-1}$.K$^{-1}$, est la conductivité thermique de la portion de conducteur 10, S est sa section exprimée en m$^2$ et T est la température d'un point de la portion de conducteur 10 à sa surface, exprimée en Kelvin (K). $\frac{dT}{dx}$ est donc la variation de cette température le long de la portion de conducteur 10.

Sous cette condition également, la puissance $P_{joule}$ par effet Joule sur la tranche dx peut s'exprimer selon l'équation connue suivante :

$$P_{joule} = R_{linéïque}^{AC} \times I_{AC}^{2} \times \mathrm{dx},$$

où $R_{linéïque}^{AC}$ est la résistance électrique linéique pour un courant alternatif, exprimée en Ω.m$^{-1}$ et supposée constante, et $I_{AC}$ est la valeur efficace du courant alternatif qui transite dans la portion de conducteur 10.

Sous cette condition également, la puissance $P_{solaire}$ du rayonnement solaire reçu sur la tranche dx peut s'exprimer selon l'équation connue suivante :

$$P_{solaire} = \alpha_s D\varphi \times \mathrm{dx} \; ,$$

où $\alpha_s$ est le coefficient d'absorptivité de la portion de conducteur 10, en général pris égal à l'émissivité $\varepsilon$ de la surface de la portion de conducteur 10, D est le diamètre de la portion de conducteur 10 exprimé en mètres (m) et $\varphi$ est le flux solaire reçu exprimé en W.m$^{-2}$.

Sous cette condition également, la puissance $P_{rayonnement}^{reçue}$ de rayonnement reçu par l'extérieur sur la tranche dx peut s'exprimer selon l'équation connue suivante :

$$P_{rayonnement}^{reçue} = \varepsilon \pi D \sigma T_a^{\,4} \times \mathrm{dx},$$

où $\sigma$ est la constante de Stefan-Boltzmann (5,67037321.10$^{-8}$ W.m$^{-2}$.K$^{-4}$) et $T_\alpha$ est la température ambiante exprimée en Kelvin.

Sous cette condition également, la puissance $P_{rayonnement}^{émise}$ de rayonnement émis par l'extérieur sur la tranche dx peut s'exprimer selon l'équation connue suivante :

$$P_{rayonnement}^{émise} = \varepsilon \pi D \sigma T^4 \times \mathrm{dx} \; .$$

Enfin, sous cette condition également, la puissance $P_{convection}$ de convection sur la tranche dx peut s'exprimer selon l'équation connue suivante :

$$P_{convection} = 8{,}55 \, (V \times D)^{0{,}448} \times (T - T_a) \times \mathrm{dx} \, .$$

où V est le paramètre de vitesse effective de vent précité exprimé en m/s.

Il en résulte le bilan thermique suivant :

$$\lambda S \frac{d^2 T}{dx^2} - 8{,}55 \, (V \times D)^{0{,}448} \times (T - T_a) - \varepsilon \pi D \sigma \big(T^4 - T_a^{\,4}\big) + R_{linéique}^{AC} \times I_{AC}^{\,2} + \alpha_s D\varphi = 0$$

En notant $\theta = T - T_\alpha$ et en réécrivant $T^4 - T_\alpha^{\,4}$ sous la forme :

$$T^4 - T_a^{\,4} = 4T_a^{\,3} \left( 1 + \frac{3}{2}\frac{\theta}{T_a} + \left(\frac{\theta}{T_a}\right)^2 + \frac{1}{4}\left(\frac{\theta}{T_a}\right)^3 \right) \times \theta \, ,$$

en remarquant par ailleurs que $\theta$ (rarement supérieure à 30 K) est toujours très inférieure à $T_\alpha$ (de l'ordre de 300 K), en notant $\overline{\theta}$ sa valeur moyenne et $C_r$ la constante suivante :

$$C_r = \varepsilon \pi D \sigma \times 4T_a^{\,3} \left( 1 + \frac{3}{2}\frac{\bar{\theta}}{T_a} + \left(\frac{\bar{\theta}}{T_a}\right)^2 + \frac{1}{4}\left(\frac{\bar{\theta}}{T_a}\right)^3 \right),$$

le bilan thermique prend la forme d'une équation différentielle du deuxième ordre :

$$\frac{d^2\theta}{dx^2} - \frac{8{,}55(V \times D)^{0{,}448} + C_r}{\lambda S} \times \theta + \frac{R_{linéique}^{AC} I_{AC}^{\,2} + \alpha_s D\varphi}{\lambda S} = 0 \, ,$$

ou, si l'on note $l_c^{\,2} = \dfrac{\lambda S}{8{,}55(V \times D)^{0{,}448} + C_r}$ :

$$\frac{d^2\theta}{dx^2} - \frac{\theta}{l_c{}^2} + \frac{R_{lin\acute{e}ique}^{AC} I_{AC}{}^2 + \alpha_s D\varphi}{\lambda S} = 0 \,.$$

La solution non divergente en $+\infty$ de cette équation différentielle est de la forme :

$$\theta(x) = \theta_\infty + (\theta(0) - \theta_\infty) \times \exp\left(-\frac{x}{l_c}\right),$$

d'où le modèle suivant de courbe d'évolution de température par conduction thermique en décroissance exponentielle le long de la portion de conducteur 10 à partir d'une origine x = 0 située au point de référence 38 :

$$T(x) = T_\infty + (T(0) - T_\infty) \times \exp\left(-\frac{x}{l_c}\right),$$

où $T_\infty$ est une valeur de température vers laquelle tend asymptotiquement la portion de conducteur 10 lorsque l'on s'éloigne du point de référence 38, T(0) est la température au point de référence 38, exp est la fonction exponentielle et $l_c$ est le paramètre défini précédemment, généralement appelé longueur caractéristique.

Ainsi, en estimant une valeur de la longueur caractéristique $l_c$ par une optimisation du modèle au vu de températures pouvant être mesurées par imagerie thermique le long de la portion de conducteur 10, on peut en déduire une valeur pour le paramètre de vitesse effective de vent :

$$V = \left(\frac{\lambda S}{8{,}55 D^{0{,}448} l_c{}^2} - \frac{C_r}{8{,}55 D^{0{,}448}}\right)^{\frac{1}{0{,}448}} \,.$$

D'une façon plus générale, même en faisant varier légèrement les modèles de puissances définis précédemment, on peut considérer que la relation de dépendance entre la longueur caractéristique $l_c$ et le paramètre de vitesse effective de vent prend la forme suivante :

$$V = \left(\frac{A}{l_c{}^2} - B\right)^n,$$

où A est un paramètre dépendant de caractéristiques physiques de la portion de conducteur 10, B est un paramètre dépendant de caractéristiques physiques et environnementales de la portion de conducteur 10 et n est une constante réelle. Dans l'exemple choisi, $A = \frac{\lambda S}{8{,}55 D^{0{,}448}},\ B = \frac{C_r}{8{,}55 D^{0{,}448}}$ et $n = \frac{1}{0{,}448}$.

On peut en outre simplifier la relation de dépendance entre la longueur caractéristique $l_c$ et le paramètre de vitesse effective de vent en considérant que dans les conditions classiques de mesure sur les lignes électriques aériennes, la température du conducteur est modérée et que les termes de rayonnement (solaire, émis ou reçu) peuvent être négligés devant les autres dans l'équation de bilan thermique. Dans ce cas, selon l'exemple choisi :

$$V = \left(\frac{\lambda S}{8{,}55 D^{0{,}448} l_c{}^2}\right)^{\frac{1}{0{,}448}} \,.$$

Ce qui donne, d'une façon plus générale, une relation de dépendance entre la longueur caractéristique $l_c$ et le paramètre de vitesse effective de vent qui prend la forme suivante :

$$V = A' \cdot l_c{}^{-n'},$$

où A' est un paramètre dépendant de caractéristiques physiques de la portion de conducteur et *n'* est une constante réelle. Dans l'exemple choisi, $A' = \left(\frac{\lambda S}{8,55 D^{0,448}}\right)^{\overline{0,448}}$ et $n' = \frac{2}{0.448}$.

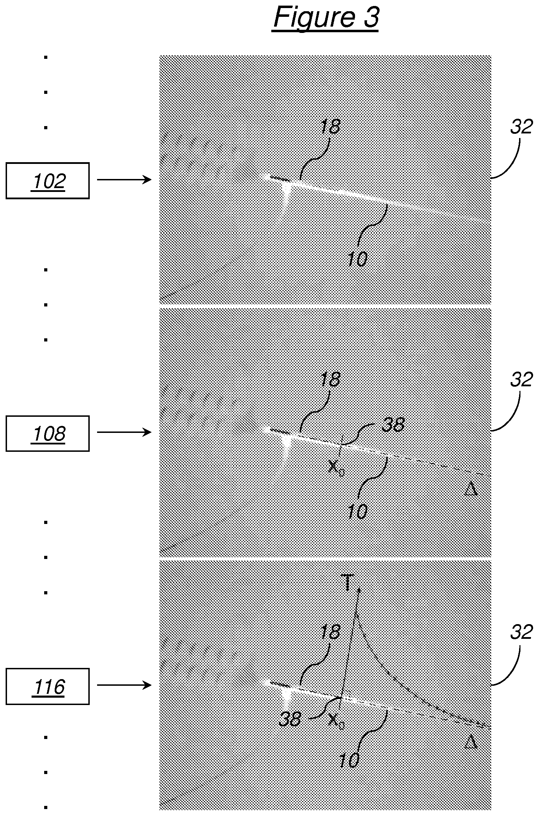

Une fois que le modèle de courbe d'évolution de température dans la portion de conducteur 10 à partir du point de référence 38 a été défini et enregistré dans les moyens de stockage 24 parmi les paramètres 28, une image thermique de la portion de conducteur 10 incluant le point de référence 38, l'image thermique 32 est capturée à l'aide du capteur infrarouge 20 et enregistrée en mémoire 24 lors d'une étape 102. Il s'agit par exemple de l'image illustrée en partie supérieure de la figure 3. Elle est transmise au calculateur 30 de l'ordinateur 22 au cours d'une étape suivante 104.

Par traitement d'image et de façon connue en soi, le calculateur 30 exécute le programme d'ordinateur 26 pour :

- détecter préalablement au cours d'une étape 106 un axe longitudinal Δ de la portion de conducteur 10, cette détection pouvant par exemple être réalisée par une analyse en composantes principales d'au moins une partie de l'image thermique 32, et
- localiser au cours d'une étape 108 le point de référence 38 dans l'image thermique 32, plus précisément sur l'axe longitudinal Δ à l'abscisse x$_0$ = 0, cette localisation pouvant être exécutée automatiquement ou semi-automatiquement en incluant éventuellement une connaissance *a priori* de l'équipement 18 ou de l'interface entre cet équipement 18 et la portion de conducteur 10.

A l'issue de ces deux étapes 106 et 108, on obtient le résultat illustré en partie médiane de la figure 3.

Au cours d'une étape 110 réalisée par exécution du programme d'ordinateur 26, le calculateur 30 établit une correspondance par conversion entre les distances qui peuvent être exprimées en pixels dans l'image thermique 32 et des distances exprimées en mètres (m). La règle de conversion peut être prédéterminée par étalonnage ou réglage logiciel. Elle peut aussi en variante être déterminée par connaissance a *priori* de certaines dimensions telles que le diamètre de la portion de conducteur 10. A l'issue de l'analyse en composantes principales de l'étape 106 par exemple, le diamètre de la portion de conducteur 10 exprimé en pixels peut être estimé dans l'image thermique 32. La conversion est alors immédiatement obtenue par association de cette estimation avec une connaissance a *priori* du diamètre de la portion de conducteur 10 exprimé en mètres. Elle peut être enregistrée en mémoire sous la forme d'une table de conversion.

Au cours d'une étape 112 réalisée par exécution du programme d'ordinateur 26, le calculateur 30 établit une correspondance par conversion entre valeurs de pixels, en couleurs ou en nuances de gris, et valeurs de température exprimées en Kelvin (K) selon une règle de conversion prédéterminée, notamment par étalonnage ou réglage logiciel du capteur infrarouge 20. Elle peut également être enregistrée en mémoire sous la forme d'une table de conversion.

Au cours d'une étape 114 réalisée par exécution du programme d'ordinateur 26, le calculateur 30 sélectionne un ensemble de points échantillonnés le long de l'axe longitudinal Δ et attribue à chacun une valeur de distance par rapport au point de référence 38 exprimée en mètres grâce à la règle de conversion établie à l'étape 110.

Au cours d'une étape 116 réalisée par exécution du programme d'ordinateur 26, le calculateur 30 estime une valeur T de température en chaque point sélectionné à l'étape 114. Cette estimation peut avantageusement être obtenue par un calcul d'interpolation de températures de pixels voisins de chaque point sélectionné considéré, le voisinage étant défini de façon connue en soi en fonction de la résolution de l'image thermique 32. Les valeurs de températures des pixels voisins de chaque point sélectionné sont exprimées en Kelvin grâce à la règle de conversion établie à l'étape 112.

A l'issue des deux étapes 114 et 116, on obtient le résultat illustré en partie inférieure de la figure 3, c'est-à-dire un ensemble de valeurs T de températures exprimés en Kelvin pour un ensemble de distances au point de référence 38 exprimées en mètres le long de l'axe longitudinal Δ. Ces points suivent normalement une décroissance exponentielle conforme au modèle défini précédemment. Si ce n'est pas le cas à cause de certaines valeurs singulières s'écartant d'une telle décroissance exponentielle, ces valeurs singulières peuvent être écartées pour éviter tout biais dans la mesure.

Au cours d'une étape 118 réalisée par exécution du programme d'ordinateur 26, le calculateur 30 estime une valeur de longueur caractéristique $l_c$ par comparaison des valeurs de température estimées, après avoir écarté les valeurs singulières, avec le modèle stocké $T(x) = T_\infty + (T(0) - T_\infty) \times \exp\left(-\frac{x}{l_c}\right)$. Cette comparaison est avantageusement réalisée par un ajustement paramétrique de ce modèle sur les valeurs estimées à l'aide d'une méthode d'optimisation, par exemple une méthode de moindres carrés. Le seul paramètre à ajuster est la longueur caractéristique $l_c$ ce qui, compte tenu de la relation de dépendance entre cette longueur caractéristique $l_c$ et le paramètre de vitesse effective de vent, revient finalement à ajuster ce paramètre de vitesse effective de vent.

Ainsi, lors d'une étape finale 120 de mesure de la vitesse effective de vent au voisinage de la portion de conducteur 10 par estimation d'une valeur V de cette vitesse, la valeur de V est obtenue à partir de celle de $l_c$ elle-même obtenue à l'étape précédente grâce à l'une ou l'autre des relations de dépendance définies précédemment.

Il apparaît clairement qu'un procédé de mesure d'une vitesse effective de vent tel que celui décrit précédemment permet de se passer de dispositifs encombrants ou onéreux, notamment lorsqu'il s'agit de mesurer une vitesse effective de vent au voisinage de lignes électriques aériennes. Il permet une mesure fiable par simple traitement d'une image thermique de l'objet considéré, à condition que cette image inclue un point de référence, faisant interface entre l'objet et un équipement en contact thermique avec ce dernier, à partir duquel un modèle de diffusion thermique par conduction peut être exploité.

L'intérêt d'un tel procédé est encore plus apparent pour une application nécessitant de toute façon une capture d'image thermique puisqu'il peut alors être exécuté sans surcoût matériel. C'est notamment le cas lors de visites de thermographie infrarouge héliportée ou au sol. Comme évoqué précédemment, ces visites permettent d'identifier les équipements installés sur les conducteurs ayant un comportement thermique anormal et d'en mesurer la température. La température mesurée est ensuite extrapolée à des conditions de services plus contraignantes afin de juger de la sévérité de la dégradation observée. Pour réaliser cette extrapolation, non seulement l'intensité du courant traversant le conducteur est à connaître, mais également la vitesse effective de vent que la présente invention permet d'estimer simplement et de façon précise. On notera par ailleurs que l'équipement à surveiller peut être celui qui est en contact thermique avec le conducteur et qui aide ainsi à la mesure de la vitesse effective de vent. Mais il peut aussi s'agir d'un équipement qui n'est pas en contact thermique avec le conducteur, la mesure de vitesse effective de vent devant alors se faire à l'aide d'un autre équipement qui lui est en contact thermique avec le conducteur.

On notera par ailleurs que l'invention n'est pas limitée aux modes de réalisation décrits précédemment.

Ainsi par exemple, le dispositif de mesure 12 a été décrit comme comportant un ordinateur 22 avec mémoire 24 et calculateur 30 exécutant un programme d'ordinateur 26. Ce programme d'ordinateur 26 est fonctionnellement présenté comme unique mais pourrait tout aussi bien être décomposé selon toutes les combinaisons possibles en plusieurs logiciels. Ses fonctions pourraient aussi être au moins en partie micro programmées ou micro câblées dans des circuits intégrés dédiés. Ainsi, en variante, l'ordinateur 22 pourrait être remplacé par un dispositif électronique composé uniquement de circuits numériques (sans programme d'ordinateur) pour la réalisation des mêmes fonctions.

Il apparaîtra plus généralement à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué. La portée de l'invention est définie uniquement par les revendications annexées.

**Revendications**

**1.** Procédé de mesure d'une vitesse effective de vent au voisinage d'un objet (10), **caractérisé en ce qu'**il comporte les étapes suivantes :

- détermination préalable d'un point de référence (38) situé à une interface de contact thermique entre l'objet (10) et un équipement (18), autre que l'objet et de température différente d'une température d'une portion de l'objet (10) à distance de l'équipement (18), en contact thermique avec l'objet (10),
- stockage (100) d'un modèle de courbe d'évolution de température dans l'objet (10) à partir du point de référence (38) prédéterminé, le modèle comportant un paramètre de vitesse effective de vent,
- capture (102) d'une image thermique infrarouge (32) de l'objet (10) et de son point de référence (38), à l'aide d'un capteur infrarouge (20) d'image thermique,
- transmission (104) de l'image thermique infrarouge (32) à un calculateur (30),
- localisation (108) dans l'image thermique infrarouge (32), par le calculateur (30), du point de référence (38),
- estimation (110, 112, 114, 116) dans l'image thermique infrarouge (32), par le calculateur (30), de plusieurs valeurs (T) de température dans l'objet (10) à partir du point de référence (38) localisé, et
- mesure (118, 120) de la vitesse effective de vent par estimation d'une valeur (V) de cette vitesse sur la base d'une comparaison (118) des valeurs (T) de température estimées avec le modèle stocké.

**2.** Procédé de mesure d'une vitesse effective de vent selon la revendication 1, dans lequel l'objet (10) est de forme essentiellement allongée autour d'un axe longitudinal ($\Delta$) et le modèle est un modèle de courbe d'évolution de température le long de cet axe longitudinal ($\Delta$), l'estimation de plusieurs valeurs (T) de température se faisant le long de cet axe longitudinal ($\Delta$).

**3.** Procédé de mesure d'une vitesse effective de vent selon la revendication 1 ou 2, dans lequel l'objet (10) est une portion de conducteur d'une ligne aérienne de transport d'électricité et le modèle est un modèle de courbe d'évolution de température le long de cette portion de conducteur, l'estimation de plusieurs valeurs (T) de température se faisant le long de la portion de conducteur.

4. Procédé de mesure d'une vitesse effective de vent selon la revendication 3, dans lequel le modèle de courbe d'évolution de température le long de la portion de conducteur (10) prend la forme suivante :

$$T(x) = T_\infty + (T(0) - T_\infty) \times \exp\left(-\frac{x}{l_c}\right),$$

où x est une abscisse le long de la portion de conducteur (10) exprimée à partir d'une origine située au point de référence (38), $T_\infty$ est une valeur de température vers laquelle tend asymptotiquement la portion de conducteur (10) lorsque l'on s'éloigne du point de référence (38), T(0) est la température au point de référence, exp est la fonction exponentielle et $l_c$ est un paramètre, appelé longueur caractéristique, dépendant du paramètre de vitesse effective de vent.

5. Procédé de mesure d'une vitesse effective de vent selon la revendication 4, dans lequel la relation de dépendance entre la longueur caractéristique $l_c$ et le paramètre de vitesse effective de vent noté V prend la forme suivante :

$$V = \left(\frac{A}{l_c^2} - B\right)^n,$$

où A est un paramètre dépendant de caractéristiques physiques de la portion de conducteur (10), B est un paramètre dépendant de caractéristiques physiques et environnementales de la portion de conducteur (10) et n est une constante réelle.

6. Procédé de mesure d'une vitesse effective de vent selon la revendication 4, dans lequel la relation de dépendance entre la longueur caractéristique $l_c$ et le paramètre de vitesse effective de vent noté V prend la forme suivante :

$$V = A' \cdot l_c^{-n'},$$

où A' est un paramètre dépendant de caractéristiques physiques de la portion de conducteur (10) et n' est une constante réelle.

7. Procédé de mesure d'une vitesse effective de vent selon l'une quelconque des revendications 3 à 6, dans lequel l'étape (110, 112, 114, 116) d'estimation de plusieurs valeurs (T) de température le long de la portion de conducteur (10) comporte :

- une conversion (112) entre valeurs de pixels et valeurs de température exprimées en Kelvin selon une règle de conversion prédéterminée, et
- une conversion (110) entre des distances exprimées en pixels et des distances exprimées en mètres selon une règle de conversion déterminée par :

• estimation, dans l'image thermique (32) par le calculateur (30), d'un diamètre de la portion de conducteur (10) exprimé en pixels, et
• association de ce diamètre estimé à un diamètre connu de la portion de conducteur (10) exprimé en mètres.

8. Procédé de mesure d'une vitesse effective de vent selon l'une quelconque des revendications 2 à 7, comportant une détection préalable (106) d'axe longitudinal (Δ) de l'objet (10) réalisée par une analyse en composantes principales d'au moins une partie de l'image thermique (32), cette analyse étant exécutée par le calculateur (30).

9. Procédé de mesure d'une vitesse effective de vent selon l'une quelconque des revendications 1 à 8, dans lequel la comparaison (118) des valeurs de température (T) estimées avec le modèle stocké lors de l'étape (118, 120) de mesure de la vitesse effective de vent est réalisée par un ajustement paramétrique du modèle de courbe d'évolution de température dans l'objet (10), incluant un ajustement du paramètre de vitesse effective de vent, à l'aide d'une méthode d'optimisation, par exemple une méthode de moindres carrés, exécutée par le calculateur (30).

**10.** Programme d'ordinateur (26) téléchargeable depuis un réseau de communication et/ou enregistré sur un support (24) lisible par ordinateur et/ou exécutable par un processeur (30), pour la mesure d'une vitesse effective de vent au voisinage d'un objet (10), **caractérisé en ce qu'**il comprend des instructions pour l'exécution des étapes suivantes lorsqu'il est exécuté sur un ordinateur :

- localisation (108), dans une image thermique infrarouge (32) obtenue par un capteur thermique infrarouge (20), d'un point de référence prédéterminé (38) situé à une interface de contact thermique entre l'objet (10) et un équipement (18) , autre que l'objet et de température différente d'une température d'une portion de l'objet (10) à distance de l'équipement (18), en contact thermique avec l'objet (10),
- estimation (110, 112, 114, 116), dans l'image thermique infrarouge (32), de plusieurs valeurs (T) de température dans l'objet (10) à partir du point de référence (38) localisé, et
- mesure (118, 120) de la vitesse effective de vent par estimation d'une valeur (V) de cette vitesse sur la base d'une comparaison (118) des valeurs (T) de température estimées avec un modèle de courbe d'évolution de température dans l'objet (10) à partir du point de référence (38), le modèle comportant un paramètre de vitesse effective de vent.

**11.** Dispositif (12) de mesure d'une vitesse effective de vent au voisinage d'un objet (10) en contact thermique avec un équipement (18) autre que cet objet et de température différente d'une température d'une portion de l'objet (10) à distance de l'équipement (18), **caractérisé en ce qu'**il comporte :

- des moyens (24) de stockage ayant stocké un modèle de courbe d'évolution de température dans l'objet (10) à partir d'un point de référence prédéterminé (38) situé à une interface de contact thermique entre l'objet (10) et l'équipement (18), le modèle comportant un paramètre de vitesse effective de vent,
- un capteur infrarouge (20) d'image thermique,
- des moyens (24) de stockage d'une image thermique infrarouge (32) de l'objet (10) et de son point de référence (38), cette image thermique infrarouge (32) étant obtenue à l'aide du capteur infrarouge (20), et
- un calculateur (30) conçu pour :

• localiser le point de référence (38) dans l'image thermique infrarouge (32) obtenue à l'aide du capteur infrarouge (20),
• estimer, dans l'image thermique infrarouge (32), plusieurs valeurs (T) de température dans l'objet (10) à partir du point de référence (38) localisé, et
• mesurer la vitesse effective de vent par estimation d'une valeur (V) de cette vitesse sur la base d'une comparaison des valeurs (T) de température estimées avec le modèle stocké.

**Patentansprüche**

**1.** Verfahren zur Messung einer effektiven Windgeschwindigkeit in der Nähe eines Objektes (10), **dadurch gekennzeichnet, dass** es die folgenden Schritte umfasst:

- vorheriges Bestimmen eines Referenzpunkts (38), der sich an einer Wärmekontaktschnittstelle zwischen dem Objekt (10) und einer Apparatur (18), bei der es sich nicht um das Objekt handelt und mit einer Temperatur, die sich von einer Temperatur eines Abschnitts des Objekts (10) in einer Entfernung von der Apparatur (18) unterscheidet, in Wärmekontakt mit dem Objekt (10) befindet,
- Speichern (100) eines Modells einer Temperaturverlaufskurve in dem Objekt (10) von dem vorher bestimmten Referenzpunkt (38), wobei das Modell einen effektiven Windgeschwindigkeitsparameter umfasst,
- Aufnehmen (102) eines Infrarotwärmebilds (32) des Objekts (10) und seines Referenzpunkts (38) mithilfe eines Infrarotsensors (20) für Wärmebilder,
- Übertragen (104) des Infrarotwärmebilds (32) an einen Rechner (30),
- Lokalisieren (108) des Referenzpunkts (38) in dem Infrarotwärmebild (32) durch den Rechner (30),
- Schätzen (110, 112, 114, 116) von mehreren Temperaturwerten (T) in dem Objekt (10) von dem lokalisierten Referenzpunkt (38) in dem Infrarotwärmebild (32) durch den Rechner (30) und
- Messen (118, 120) der effektiven Windgeschwindigkeit durch Schätzen eines Werts (V) dieser Geschwindigkeit auf der Basis eines Vergleichs (118) von geschätzten Temperaturwerten (T) mit dem gespeicherten Modell.

2. Verfahren zur Messung einer effektiven Windgeschwindigkeit nach Anspruch 1, wobei das Objekt (10) eine im Wesentlichen längliche Form um eine Längsachse ($\Delta$) aufweist und das Modell ein Modell einer Temperaturverlaufskurve entlang dieser Längsachse ($\Delta$) ist, wobei das Schätzen von mehreren Temperaturwerten (T) entlang dieser Längsachse ($\Delta$) vorgenommen wird.

3. Verfahren zur Messung einer effektiven Windgeschwindigkeit nach Anspruch 1 oder 2, wobei das Objekt (10) ein Leiterabschnitt einer Freileitung zum Stromtransport ist und das Modell ein Modell einer Temperaturverlaufskurve entlang diesem Leiterabschnitt ist, wobei das Schätzen von mehreren Temperaturwerten (T) entlang dem Leiterabschnitt vorgenommen wird.

4. Verfahren zur Messung einer effektiven Windgeschwindigkeit nach Anspruch 3, wobei das Modell einer Temperaturverlaufskurve entlang dem Leiterabschnitt (10) die folgende Form annimmt:

$$T(x) = T_\infty + (T(0) - T_\infty)x\exp\left(-\frac{x}{l_c}\right),$$

wobei x eine Abszisse entlang dem Leiterabschnitt (10) ist, die ab einem Ursprung, der sich am Referenzpunkt (38) befindet, ausgedrückt ist, $T_\infty$ ein Temperaturwert ist, zu dem der Leiterabschnitt (10) asymptotisch tendiert, wenn der Referenzpunkt (38) entfernt wird, T(0) die Temperatur am Referenzpunkt ist, exp die Exponentialfunktion ist und $l_c$ ein Parameter ist, charakteristische Länge genannt, der von dem effektiven Windgeschwindigkeitsparameter abhängt.

5. Verfahren zur Messung einer effektiven Windgeschwindigkeit nach Anspruch 4, wobei die Abhängigkeitsbeziehung zwischen der charakteristischen Länge $l_c$ und dem notierten effektiven Windgeschwindigkeitsparameter V die folgende Form annimmt:

$$V = \left(\frac{A}{l_c^2} - B\right)^n,$$

wobei A ein Parameter ist, der von physikalischen Charakteristika des Leiterabschnitts (10) abhängt, *B* ein Parameter ist, der von physikalischen und Umweltcharakteristika des Leiterabschnitts (10) abhängt, und n eine reale Konstante ist.

6. Verfahren zur Messung einer effektiven Windgeschwindigkeit nach Anspruch 4, wobei die Abhängigkeitsbeziehung zwischen der charakteristischen Länge $l_c$ und dem notierten effektiven Windgeschwindigkeitsparameter V die folgende Form annimmt:

$$V = A' \cdot l_c^{-n'},$$

wobei A' ein Parameter ist, der von physikalischen Charakteristika des Leiterabschnitts (10) abhängt, und n' eine reale Konstante ist.

7. Verfahren zur Messung einer effektiven Windgeschwindigkeit nach einem der Ansprüche 3 bis 6, wobei der Schritt (110, 112, 114, 116) des Schätzens von mehreren Temperaturwerten (T) entlang dem Leiterabschnitt (10) umfasst:

- eine Umwandlung (112) zwischen Werten von Pixeln und Temperaturwerten, in Kelvin ausgedrückt, gemäß einem vorher bestimmten Umwandlungsgesetz und
- eine Umwandlung (110) zwischen Entfernungen, in Pixeln ausgedrückt, und Entfernungen, in Metern ausgedrückt, gemäß einem vorher bestimmten Umwandlungsgesetz durch:

• Schätzung eines Durchmessers des Leiterabschnitts (10), in Pixeln ausgedrückt, in dem Wärmebild (32) durch den Rechner (30) und
• Assoziation dieses geschätzten Durchmessers mit einem bekannten Durchmesser des Leiterabschnitts (10), in Metern ausgedrückt.

8. Verfahren zur Messung einer effektiven Windgeschwindigkeit nach einem der Ansprüche 2 bis 7, umfassend eine vorherige Erfassung (106) einer Längsachse (Δ) des Objekts (10), die durch eine Analyse von Hauptkomponenten von mindestens einem Teil des Wärmebilds (32) umgesetzt wird, wobei diese Analyse durch den Rechner (30) ausgeführt wird.

9. Verfahren zur Messung einer effektiven Windgeschwindigkeit nach einem der Ansprüche 1 bis 8, wobei der Vergleich (118) von geschätzten Temperaturwerten (T) mit dem gespeicherten Modell während des Schritts (118, 120) des Messens der effektiven Windgeschwindigkeit durch eine Parameteranpassung des Modells einer Temperaturverlaufskurve in dem Objekt (10), beinhaltend eine Anpassung des effektiven Windgeschwindigkeitsparameters, mithilfe einer Optimierungsmethode, beispielsweise einer Methode der kleinsten Quadrate, das von dem Rechner (30) ausgeführt wird, umgesetzt wird.

10. Computerprogramm (26), von einem Kommunikationsnetzwerk herunterladbar und/oder auf einem computerlesbaren Träger (24) aufgezeichnet und/oder durch einen Prozessor (30) ausführbar, zur Messung einer effektiven Windgeschwindigkeit in der Nähe eines Objekts (10), **dadurch gekennzeichnet, dass** es Anweisungen zur Ausführung der folgenden Schritte umfasst, wenn es auf einem Computer ausgeführt wird:

- Lokalisieren (108) eines vorher bestimmten Referenzpunkts (38), der sich an einer Wärmekontaktschnittstelle zwischen dem Objekt (10) und einer Apparatur (18), bei der es sich nicht um das Objekt handelt und mit einer Temperatur, die sich von einer Temperatur eines Abschnitts des Objekts (10) in einer Entfernung von der Apparatur (18) unterscheidet, in Wärmekontakt mit dem Objekt (10) befindet, in einem Infrarotwärmebild (32), das durch einen Infrarotwärmesensor (20) erhalten wird,
- Schätzen (110, 112, 114, 116) von mehreren Temperaturwerten (T) in dem Objekt (10) von dem lokalisierten Referenzpunkt (38) in dem Infrarotwärmebild (32) und
- Messen (118, 120) der effektiven Windgeschwindigkeit durch Schätzen eines Werts (V) dieser Geschwindigkeit auf der Basis eines Vergleichs (118) von geschätzten Temperaturwerten (T) mit einem Modell einer Temperaturverlaufskurve in dem Objekt (10) von dem Referenzpunkt (38), wobei das Modell einen effektiven Windgeschwindigkeitsparameter umfasst.

11. Vorrichtung (12) zur Messung einer effektiven Windgeschwindigkeit in der Nähe eines Objekts (10) in Wärmekontakt mit einer Apparatur (18), bei der es sich nicht um dieses Objekt handelt und mit einer Temperatur, die sich von einer Temperatur eines Abschnitts des Objekts (10) in einer Entfernung von der Apparatur (18) unterscheidet, **dadurch gekennzeichnet, dass** sie umfasst:

- Speichermittel (24), auf denen ein Modell einer Temperaturverlaufskurve in dem Objekt (10) von einem Referenzpunkt (38), der sich an einer Wärmekontaktschnittstelle zwischen dem Objekt (10) und der Apparatur (18) befindet, gespeichert ist, wobei das Modell einen effektiven Windgeschwindigkeitsparameter umfasst,
- einen Infrarotsensor (20) für Wärmebilder,
- Speichermittel (24) für eine Infrarotwärmebild (32) des Objekts (10) und seines Referenzpunkts (38), wobei dieses Infrarotwärmebild (32) mithilfe des Infrarotsensors (20) erhalten wird, und
- einen Rechner (30), der vorgesehen ist zum:

• Lokalisieren des Referenzpunkts (38) in dem Infrarotwärmebild (38), das mithilfe des Infrarotsensors (20) erhalten wird,
• Schätzen von mehreren Temperaturwerten (T) in dem Objekt (10) von dem lokalisierten Referenzpunkt (38) in dem Infrarotwärmebild (32) und
• Messen der effektiven Windgeschwindigkeit durch Schätzen eines Werts (V) dieser Geschwindigkeit auf der Basis eines Vergleichs von geschätzten Temperaturwerten (T) mit dem gespeicherten Modell.

**Claims**

1. A method for measuring an effective wind speed in the vicinity of an object (10), **characterised in that** it comprises the following steps:

- pre-determining a reference point (38) located at a thermal contact interface between the object (10) and a piece of equipment (18), other than the object and of a temperature different from a temperature of a portion of the object (10) remote from the equipment (18), in thermal contact with the object (10),
- storing (100) a model of temperature evolution in the object (10) from the predetermined reference point (38), the model comprising an effective wind speed parameter,
- capturing (102) an infrared thermal image (32) of the object (10) and its reference point (38), using an infrared thermal image sensor (20),
- transmission (104) of the infrared thermal image (32) to a computer (30),
- location (108) of the reference point (38) in the infrared thermal image (32) by the computer (30),
- assessing (110, 112, 114, 116) in the infrared thermal image (32), by the computer (30), several temperature values (T) in the object (10) from the located reference point (38), and
- measurement (118, 120) of the effective wind speed by assessing a value (V) of this speed on the basis of a comparison (118) of the estimated temperature values (T) with the stored model.

2. The method for measuring an effective wind speed according to claim 1, wherein the object (10) is substantially elongated about a longitudinal axis ($\Delta$) and the model is a temperature evolution curve model along this longitudinal axis ($\Delta$), wherein the assessment of several temperature values (T) takes place along this longitudinal axis ($\Delta$).

3. The method for measuring an effective wind speed according to claim 1 or 2, wherein the object (10) is a conductor portion of an overhead power line and the model is a model of a temperature evolution curve along this conductor portion, wherein the assessment of several temperature values (T) is done along the conductor portion.

4. The method for measuring an effective wind speed according to claim 3, wherein the model of temperature evolution curve along the conductor portion (10) takes the following form:

$$T(x) = T_\infty + (T(0) - T_\infty) \times \exp\left(-\frac{x}{l_c}\right),$$

where x is an abscissa along the conductor portion (10) expressed from an origin at the reference point (38), $T_\infty$ is a temperature value towards which the conductor portion (10) asymptotically tends away from the reference point (38), T(0) is the temperature at the reference point, exp is the exponential function, and $l_c$ is a parameter, called the characteristic length, which depends on the effective wind speed parameter.

5. The method for measuring an effective wind speed according to claim 4, wherein the dependency relationship between the characteristic length $l_c$ and the effective wind speed parameter V takes the following form:

$$V = \left(\frac{A}{l_c^2} - B\right)^n,$$

where A is a parameter dependent on physical characteristics of the conductor portion (10), *B* is a parameter dependent on physical and environmental characteristics of the conductor portion (10) and *n* is a real constant.

6. The method for measuring an effective wind speed according to claim 4, in which the dependency relationship between the characteristic length $l_c$ and the effective wind speed parameter V takes the following form:

$$V = A' \cdot l_c^{-n'},$$

where *A'* is a parameter depending on the physical characteristics of the conductor portion (10) and *n'* is a real constant.

7. The method for measuring an effective wind speed according to any of claims 3 to 6, wherein the step (110, 112, 114, 116) of assessing a plurality of temperature values (T) along the conductor portion (10) comprises:

- a conversion (112) between pixel values and temperature values expressed in Kelvin according to a predetermined conversion rule, and
- a conversion (110) between distances expressed in pixels and distances expressed in metres according to a conversion rule determined by:

• assessing, in the thermal image (32) by the computer (30), a diameter of the conductor portion (10) expressed in pixels, and
• associating this assessed diameter with a known diameter of the conductor section (10) expressed in metres.

8. The method for measuring an effective wind speed according to any one of claims 2 to 7, comprising a prior detection (106) of longitudinal axis ($\Delta$) of the object (10) carried out by a principal component analysis of at least a part of the thermal image (32), this analysis being carried out by the computer (30).

9. The method for measuring an effective wind speed according to any one of claims 1 to 8, wherein the comparison (118) of the assessed temperature values (T) with the model stored in the step (118, 120) of measuring the effective wind speed is performed by a parametric adjustment of the temperature evolution curve model in the object (10), including an adjustment of the effective wind speed parameter, using an optimization method, e.g., a least squares method, performed by the computer (30).

10. A computer program (26) downloadable from a communications network and/or stored on a computer-readable medium (24) and/or executable by a processor (30), for measuring an effective wind speed in the vicinity of an object (10), **characterised in that** it comprises instructions for performing the following steps when executed on a computer:

- location (108), in a thermal infrared image (32) obtained by a thermal infrared sensor (20), of a predetermined reference point (38) located at a thermal contact interface between the object (10) and a piece of equipment (18), other than the object and of a temperature different from a temperature of a portion of the object (10) at a distance from the equipment (18), in thermal contact with the object (10),
- assessing (110, 112, 114, 116), in the thermal infrared image (32), several temperature values (T) in the object (10) from the located reference point (38), and
- measurement (118, 120) of the effective wind speed by assessing a value (V) of this speed on the basis of a comparison (118) of the estimated temperature values (T) with a model of the temperature evolution curve in the object (10) from the reference point (38), the model comprising an effective wind speed parameter.

11. A device (12) for measuring an effective wind speed in the vicinity of an object (10) in thermal contact with a piece of equipment (18) other than that object and of a temperature different from a temperature of a portion of the object (10) at a distance from the equipment (18), **characterised in that** it comprises:

- storage means (24) wherein a temperature evolution curve model in the object (10) from a predetermined reference point (38) located at a thermal contact interface between the object (10) and the equipment (18) has been stored, the model comprising an effective wind speed parameter,
- an infrared thermal image sensor (20),
- means (24) for storing a thermal infrared image (32) of the object (10) and its reference point (38), said thermal infrared image (32) being obtained using the infrared sensor (20), and
- a computer (30) designed for:

• locating the reference point (38) in the thermal infrared image (32) obtained with the infrared sensor (20),
• assessing, in the infrared thermal image (32), several temperature values (T) in the object (10) from the located reference point (38), and
• measuring the effective wind speed by assessing a value (V) of this speed based on a comparison of the assessed temperature values (T) with the stored model.

## Figure 1

## Figure 2

## Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3047083 B1
- US 4728887 A
- US 6441603 B1
- US 20140163884 A1
- DE 102007034321 A1

**Littérature non-brevet citée dans la description**

- **NAM-TRUNG NGUYEN.** A novel wind sensor concept based on thermal image measurement using a temperature sensor array. *Sensors and Actuators,* vol. 110 (1-3), 323-327